# EUROPEAN PATENT SPECIFICATION

(11) **EP 2 995 700 B1**
(45) Date of publication and mention of the grant of the patent: **24.07.2024**
(21) Application number: 14722390.3
(22) Date of filing: 13.02.2014
(51) Int. Cl.: C25B 1/04, C25B 11/043

(54) **ELECTROLYSER AND METHOD FOR PRODUCING SYNTHESIS GAS BY WATER ELECTROLYSIS USING GRAPHITE/CARBON ELECTRODES**
ELEKTROLYSEUR UND VERFAHREN ZUR HERSTELLUNG VON SYNTHESEGAS DURCH WASSERELEKTROLYSE MIT GRAPHIT-/KOHLENSTOFFELEKTRODEN
ÉLECTROLYSEUR ET PROCÉDÉ DE PRODUCTION DE GAZ DE SYNTHÈSE PAR ÉLECTROLYSE DE L'EAU, UTILISANT DES ÉLECTRODES DE GRAPHITE/CARBONE

(30) Priority: 13.02.2013 PT 10677913
(43) Date of publication of application: 16.03.2016
(73) Proprietor: Santana Campos Rodrigues, José João, 1990-383 Moscavide (PT); Secil-Companhia Geral de Cal e Cimento S.A., 1600-079 Lisboa (PT)
(72) Inventor: Santana Campos Rodrigues, José João, 1990-383 Moscavide (PT)
(74) Representative: Pereira da Cruz, Joao
(86) International application number: PCT/PT2014/000011
(87) International publication number: WO 2014/126489

(56) References cited:
- WO-A2-2012/083209
- US-A- 3 389 200
- US-A- 3 654 120
- US-A- 4 348 268
- US-A1- 2007 131 909
- US-A1- 2008 127 646

## Description

### TECHNICAL FIELD

The present invention relates to the field of electrolysis technology, the electrolysers industry and the production of synthetic hydrocarbons.

The present invention relates to a new simplified electrolyser.

Also describes an electrochemical process for production of syngas at low temperatures and pressures, especially facilitated in alkaline electrolysers, without separation of hydrogen and oxygen, with graphite/carbon electrodes previously described.

### BACKGROUND OF THE INVENTION

There are three technologies to perform co-electrolysis of H₂0/C0₂: alkaline electrolysis, PEM electrolysis using polymeric membrane and Solid Oxide Electrolysis (SOE) - electrolysis using high temperature solid oxides. The advantages and disadvantages of each technology are presented in Table 1.

**Table 1. Advantages and disadvantages of current technologies of water electrolysis.**

| Technology | Some advantages | Disadvantages |
|---|---|---|
| Alkaline | Technology and durability | Low current density |
| | Stablished | Corrosive electrolyte |
| | Doesn't use noble materials as catalysts | |
| | Ability to pressurization | |
| PEM | High current density | Noble metals as catalysts |
| | High pure Hydrogen | |
| | Ability to pressurization | High investment costs |
| | Easy configuration | Limited time life |
| SOE | High efficiency | R&D stage |
| | Doesn't use noble materials as catalysts | Time life not tested |
| | | Complex heat management |
| | High current density | |
| | Co-electrolysis of CO₂/H₂0 | |

### DESCRIPTION OF THE RELATED ART

**Patent** WO2010120581 ("Method for producing solid carbon by reducing carbon oxides") generally refers to a process for the catalytic conversion of carbon oxides to high value solid carbon products and using carbon oxides (for example, carbon monoxide and carbon dioxide) as the primary carbon source for the production of the solid carbon product (nanocarbons) using a reducing agent (such as hydrogen or a hydrocarbon), typically in the presence of a catalyst. This method can be used for the commercial manufacture of solid carbon in various morphologies, and for catalytic conversion of carbon oxides to solid carbon and water.

This invention aims to obtain nanocarbons using Hydrogen (from electrolysis) as a reducing agent. It is a technology for transformation and sequestration of CO/C02, a process that is the reverse of what the Applicant intends to patent.

**Patents** BE1014956**/**BE1014965 ("Various aspects of a process for producing energy and fuel from municipal refuse, e.g. a screw press for refuse compaction"). In these patents, various aspects of a process for the production of energy and fuel from municipal wastes are claimed.

These patents aim to recover municipal wastes in an integrated process, with several alternative treatments from the molecular dissociation produced by a plasma process. It is an alternative way of obtaining synthesis gas and other gases following a completely different path of the application, namely it does not use electrolysers to produce hydrogen.

**Patent** SU1613507 ("A method of electrochemical gasification of carbonaceous materials") refers to gasification of solid fuels and other carbonaceous materials by using electrical process for producing hydrogen, hydrocarbon gases and syngas. The application of the proposed method increases the yield of hydrogen per unit area of the electrode during the gasification process. The gasification of carbonaceous material is accomplished at the anode, covered with an oxide film obtained by a spark obtained by electrical discharge.

The objective is the gasification of carbonaceous materials using an electrical discharge, with the production of hydrogen and carbon oxides. The process does not involve the electrolysis of water just as it happens as in the process to be patented.

**Patent** EP2465915 (A1**)** ("Combustible gas composition") discloses a method and a system for synthesizing a composition of fuel gas and a fuel gas composition obtained by such a method. The method comprises the supply of a primary gas obtained by separating water by means of an electric field; the primary gas is mixed with a secondary gas and air, wherein the secondary gas fuel comprises a hydrocarbon gas.

In this patent carbon oxides (secondary gas) are separately obtained and then mixed with the gases from electrolysis to obtain the synthesis gas. The application differentiates in the electrolyser design and with the use of a secondary gas, obtained separately.

**Patents** FR2893033 (B1**),** US2007131909 (A1**),** FI20065688 (A**) ("Synthesis gas production")** - These patents to produce synthesis gas involves the electrolysis of water to produce hydrogen and oxygen at a pressure of 0.5 - 3.5 MPa. A stream comprising a major portion of the carbon contained in the carbonaceous material is subjected to partial oxidation with pure oxygen produced by electrolysis. Part of the hydrogen produced by electrolysis is added to the stream, upstream and/or downstream of the partial oxidation, in a quantity such that the ratio of hydrogen and carbon monoxide from the final synthesis gas is 1.9-2.3.

The process differs from the one disclosed in the present patent application by using a conventional electrolyser with gas separation. The oxidation of carbonaceous matter is performed separately, although using the oxygen from electrolysis.

**Patent** FR2904832 (A1**)** ("Converting carbonaceous material into liquid hydrocarbons, e.g. diesel cuts, by gasifying, separating carbon dioxide, converting into carbon monoxide and carrying out Fischer-Tropsch synthesis"). The production of liquid hydrocarbons (I) from carbonaceous material comprising (A) an oxidation or partial reforming gasification and (B) separating carbon dioxide (CO₂) from synthesis gas (SG) obtained and mixing with gas containing hydrogen (H2) and carbon monoxide (CO), (C) conversion of CO₂ to CO and (D) the preparation of (I) by Fischer-Tropsch synthesis from gas containing CO and the SG from step C.

This patent describes the process for obtaining synthesis gas through oxidation/reforming of carbonaceous matter, with the conversion of C02 into CO to obtain Diesel by Fischer-Tropsch process. The application patent differs by using an electrolyser wi.th specific design and integrating oxidation in electrolysis process.

**Patent** US2006211777 (A1**)** ("Systems, Methods, and compositions for production of synthetic hydrocarbon compounds") refers to a process and system for producing hydrocarbon compounds or fuel by recycling carbon products which combustion generates carbon dioxide or carbon monoxide or both, and water. The energy for recycling is electricity preferably produced by non-fossil fuels, nuclear fuels, or renewable energy. The process comprises electrolysis of water, and the use of hydrogen obtained to externally reduce carbon dioxide to carbon monoxide and then using the mixture produced in conjunction with any external supply of carbon monoxide and hydrogen to a Fischer-Tropsch reactor to obtain the desired fuels, such as gasoline, jet fuel, kerosene, diesel oil and others.

The patent application differentiates regarding electrolyser design and also obtaining the synthesis gas in an integrated oxidation operation.

**Patent** US 3389200 (A**)** (Process for producing compressed vermicular graphite structures). The patent claims a process for producing compressed vermicular graphite structures. The main objective is to get improved graphite for uses as anodes in the electrolysis of aqueous solutions. Graphite anodes are generally porous and highly susceptible to oxidation. Anodes impregnated with organic resin still oxidize at an undesirable high rate, they are very brittle and are extremely sensitive to pH (increase in pH rapidly increases the wear rate of the graphite anodes due to oxidation).

The object of the invention is to provide an improved structure suitable as an anode, which is non-brittle and less susceptible to oxidation, and has greatly improved characteristics in the electrolysis of aqueous solutions. The claim essential is the manufacturing process of the vermicular graphite structures.

The objective of applicant is exactly the opposite of quoted patent: to build up an electrolyser inside which takes place the oxidation of the graphite at the anode, to produce synthetic gas.

The applicant doesn't claim any special method/ process to build up the anode (graphite) or to provide special characteristics to it (this is an ongoing research subject carried by LNEG in a partnership with the applicant) . For the present development phase and initial industrialization, the applicant is using commercial electro-erosion graphite. The applicant doesn't claim any novelty in the use of graphite anodes.

The applicant claims for a specific configuration of the electrolyser and associated operational parameters to achieve oxidation of graphite anodes (innovative step) inside the electrolyser, with production of CO/C0₂, which mixes with Hydrogen generated at the cathode producing syngas in one step.

**Patent** WO 2012/083209 A2 (Hydrogen oxidation and generation over carbon films) The main characteristic of the device is its capability to store Hydrogen using nanotubes (claim 2) . The electrochemical devices can perform a hydrogen evolution reaction (HER) in an electrolyser mode and can perform a hydrogen oxidation reaction (HOR) in oxidation mode. During periods of high energy output the primary source can power the electrochemical device to store energy producing hydrogen, which can be consumed to generate electricity as the secondary source during low energy output period by the primary source.

The overall idea is to develop a reversible electrochemical device, which can work either as electrolyser (when there is an excess of primary energy renewable), storing the hydrogen inside the nanotubes or operate as a fuel cell consuming the hydrogen to produce electricity (periods in which primary energy is not enough to satisfy demand). The applicant has a different approach to store electrical energy from non-dispatchable sources, which is the production of syngas, and not, as claimed in the referred patent application to store the hydrogen inside nanotubes integrated in the electrochemical device.

**Patent** US4348268 (A**),** (Electrode for electrolysis of water). This invention relates to a porous electrode having a catalytic coating for improving the efficiency of the electrolysis. The objects of the invention are attained by an electrode which comprises a porous graphite plate having one major surface coated with a thin layer comprising titanium and titanium dioxide.

Previous comments about **Patent** US3389200 (A**)** also apply to this patent. The applicant doesn't claim any specific and innovative process to produce graphite electrodes. Nevertheless, we will take into consideration these developments to get a greater efficiency of electrolysis process.

**Patent** US 2007/131909 (A1**)** (Process for the production of synthesis gas from carbon-containing material and electrical energy). The process consists in the production of syngas through production of hydrogen and hydrogen using electrolysis. The oxygen is used externally to reach/improve a partial oxidation (POX) of a carbonized flow (CF) obtained from gasification of a carbon-based raw material. The main issue of the patent is to balance and adjust the flows to keep the ratio of H₂ and CO between predefined values.

The present application differs from the referred patent application because the oxidation of carbon is obtained in one step inside the electrolyser (that is the reason to be used graphite electrodes) while in referred patent application the POX happens outside the electrolyser. The referred patent application uses a gasification process to obtain the CF (carbon flow), and a POX of the CF which can be accelerated by the oxygen of the electrolysis.

There are several patents with similar approach, that are already mentioned in the application: Patent EP2465915 (A1) ("Combustible gas composition"); Patent FR2893033 (B1) US2007131909 (A1), FI20065688 (A) ("Synthesis gas production"); Patent FR2904832 (A1) ("Converting carbonaceous material into liquid hydrocarbons, e.g. diesel cuts, by gasifying, separating carbon dioxide, converting into carbon monoxide and carrying out Fischer-Tropsch synthesis"); Patent US2006211777 (A1) ("Systems, Methods, and compositions for production of synthetic hydrocarbon compounds").

Recent technology with process with similar rational is the PtG/PtF (Power to Gas/Power to Fuel) approach. Demonstration projects are being promoted at several countries to support electrical grid stability, enable to maximize the renewable potential of a region to produce electricity. These projects mix hydrogen produced by electrolysis with sequestrated C0₂ (from an industry plant), to obtain a mix Gas flow of H_{2/}C0₂ (ratio can be easily adjusted), which is converted in a synthetic fuel through a catalyst reaction. But, again, the required oxidized carbon comes from an external independent source.

**Patent** US 2008/127646 (A1**)** (System and method for energy and hydrogen production). The approach employs an overall systems controller which dynamically optimizes the complete system to maximize the available inputs while providing the maximum desired outputs. Main issue of the patent is the integrated approach and the optimization achieved using a specific controller. The storage vector is Hydrogen that can be used downstream in several modes.

This is a typical PtG process already mentioned in the comments in relation to Patent US 2007/131909, using hydrogen to store energy not consumed by the demand. The claimed novelty is in the controller of the microgrid. Applicant approach uses syngas as storage energy vector. The novelty of the applicant solution is in the process to obtain syngas.

### Patent analysis concluded remarks

The patent application submitted differs from all these state-of-the-art patents.

Some of patents concerns with manufacturing of graphite electrodes. The patent application doesn't claim any method/process to build up the anode (graphite) or to provide any special characteristics to it.

Also, the applicant doesn't claim any novelty in the use of graphite electrodes. The novelty is on two main aspects of the technology:
- the design of the electrolyser without the separation of gases, which differentiates it from conventional electrolysers;
- the direct oxidation of the graphite electrodes by the oxygen released at the anode of water electrolysis.

The output is the production of synthesis gas in a single pass and not in independent sequential steps, as happens in some of the patents mentioned above.

The patented electrolyser has a much lower cost than the traditional electrolysers, and doesn't have limitations about temperature and pressure, enabling an operation that optimizes the oxidation process of carbonaceous matter.

### SUMMARY OF THE INVENTION

The present invention relates to a new simplified alkaline electrolyser, comprising:
- a sealed reservoir containing a mixture of deionized water and an electrolyte;
- a set consisting of:
   - graphite bipolar plates, and
   - separating rings adapted to isolate the plates, the set being mounted in the reservoir so that the plates are immersed in the mixture;
wherein
- the end plates are connected to the positive and negative poles of a DC voltage source, and wherein
- each graphite plate has two holes forming an upper and a lower electrolyte circulation channel; the lower channel is connected to the inlet of the electrolyte and the upper channel is connected to the output of the electrolyte.

The present invention also describes the electrolysis process for the direct production of synthesis gas, the key element for the chain of synthetic fuels chain, especially facilitated in alkaline electrolysers without separation of Hydrogen and Oxygen, with graphite electrodes.

### DETAILED DESCRIPTION

The applicant has professional experience regarding hydrogen technologies, covering topics related to the hydrogen production, associated logistics, and its use to produce electricity via fuel cells. The applicant is co-author of a hydrogen fuel cells patent for portable application - PT 103221 - 21/12/2004. Linked with present patent application, his professional experience covers hydrogen production technologies, integration of alkaline electrolysers. He is involved in projects aiming the production of synthetic fuels from hydrogen. The enhancement of penetration of non-dispatchable renewable energies in the electricity grid is putting increasingly complex challenges on grid manage, within a framework of requirements of reliability and quality of electrical service. The need for storage solutions gets relevance to manage randomness, seasonality and intermittency typical of renewables sources. A solution that is being tested is the storage of energy excess in the form of hydrogen. Hydrogen has in this case a huge market opportunity, as a storage vector, being injected into the natural gas network, within certain limits (Joint EASE/EEPA recommendations for a European Energy Storage Technology Development Roadmap towards 2030 March 2013-Final). These are the PtG projects (Power to Gas) which are currently multiplying in several countries. The next step is to transform the hydrogen in liquid fuel (Power to Fuel - PtF) by the production of synthesis gas.

The gradual acceptance of the hydrogen in the energy road maps poses a logistical challenge not yet satisfactorily resolved, related to its transportation and storage. There is an awareness of the limitations of the available solutions on the market; this one continues searching for adequate alternatives that contribute to an overriding cost reduction and to the security of energy supply for the users.

This agenda led the applicant to promote and implement PtG/PtF projects in partnerships with grid operators and power utilities.

The process of obtaining synthesis gas combining hydrogen from electrolysis with CO/C0₂, usually obtained by partial oxidation of a carbon source, wins reinforced scientific and technological interest within this context (Budzianowski and Gomes, 2013) Budzianowski, W., Gomes, J.F.P., "Perspectives for Low-carbon Electricity Production Until 2030: Lessons learned from the comparison of local contexts in Poland and Portugal", Energy Sources (in print) - B, (8) (2013). In simple terms, this path will produce liquid fuels from electricity generated by renewable sources.

Nowadays the production of synthesis gas is:
a) A step in the production of hydrogen through SMR from natural gas - this reaction is thermodynamically reversible, being possible to produce methane from synthesis gas (Sabatier reaction);
b) A path in the gasification of coal or biomass, to produce liquid synthetic fuels;
c) Synthesis gas can also be obtained by mixing hydrogen (from electrolysis) with CO/C0₂ from carbon sequestration sources, or produced by oxidation of a carbonaceous raw material (Gomes, 2013) Gomes, J.F.P., "Carbon Dioxide Sequestration Technologies", Nova Publishers Inc. Eds., New York, 2013 - ISBN 978-1-62257-187-1;

However, the high capital costs of electrolysers associated with electricity consumption for production of hydrogen, originate a high cost of hydrogen produced, which is not competitive with hydrogen obtained by reforming of methane (NG-SMR); the conclusion is that the production of synthesis gas by this process in order to produce sustainable synthetic fuels is not economically competitive today, unless particular exceptions.

Alkaline water electrolysis is one of the simplest methods of producing hydrogen, and one of the most promising technologies to large scale production of hydrogen, with the advantage of producing extremely pure hydrogen; the technology challenges are to get a significant reduction of electrolysers costs, and to increase the energy efficiency of the process. If these targets are reached, so we can produce a competitive fuel from renewable hydrogen.

Meanwhile, many technological advances are still needed to optimize the electrolysers. The alkaline electrolysis with consumable anode is a line of research that scientifically supports the present application.

The alkaline electrolysis with consumable anode is implemented based on oxidation of carbon to produce CO and C0₂ (reactions 1 and 2). The working potential of the anode is compatible with the electrolysis condition for the simultaneous production of hydrogen (cathode) and oxygen, CO, and C0₂ in the anode.

C + 2H₂0 → C0₂ + 4H⁺ + 4e⁻ (0.207 V vs. RHE) (1)

C + H₂0 → CO + 2H⁺ + 2e⁻ (0.518 V vs. RHE) (2)

The electrochemical oxidation of graphite is considered an undesired reaction in electrochemical systems such as fuel cells, flow batteries and supercapacitors that use this material as electrodes. This process results in the growth of surface oxides and loss of mass/active area associated with a reduction of the useful life time of the electrochemical system in question. (Borup R., Meyers J., Pivovar B., Kim YS, Mukundan R., N. Garland et al system. Scientific aspects of polymer electrolyte fuel cell durability and degradation Chem Rev 20 O 7; 1O 7 :39O 4 E 51) .

The favorable thermodynamic reactions are slow at referred potentials and room temperature, but have been reported to increase rapidly with potential increase. In the work performed in LNEG on the degradation of membrane cells using catalysts supported on carbon Vulcan, was detected oxidation with production of C0₂ and reduced thickness of the catalytic layer, as result of polarity reversal for insufficient fuel at the anode, confirming the reaction (1). In a study about gas diffusion electrodes for alkaline electrolysers, also in LNEG, was detected extensive oxidation of the gas diffusion layer whose main component is an ink based on VULCAN, and visualized by electron microscopy the loss of supported catalyst due the effect of oxidation of coal (MA Travassos, Vitor. L. Lopes, RA Silva, AQ Novais, CM Rangel, "Assessing Cell Polarity Reversal Degradation Phenomena in PEM Fuel Cells by Electrochemical Impedance Spectroscopy", International Journal of Hydrogen Energy, 38 (2013) 7684 - 7696), (RA Silva, CO Soares, MO Carvalho, ME Melo Jorge, A. Gomes, CM Rangel, MI da Silva Pereira, LaNi03 - based catalyst in gas diffusion electrodes: activity and stability for oxygen reactions, HYPOTHESISX, Edinburgh, Scotland, June 2013.), (RA Silva, CO Soares, MO Carvalho, ME Melo Jorge, A. Gomes , MI da Silva Pereira, CM Rangel, "Towards stable dysfunctional oxygen electrodes and corrosion resistant gas diffusion layers for regenerative fuel cells", Proceedings IV Iberian Symposium on Hydrogen, Fuel Cells and Advanced Batteries Edited by CM Rangel, HYCELTEC2013_PEMFC_PP44, ISBN: 978-989-98482-0-7, June 26-28,Estoril Congress Center, Portugal, 2013).

The application is the result of a process to which contributed the multiple lines of work developed by the Applicant and whose objectives are to achieve significantly lower cost new electrolysers, becoming economically feasible the production of sustainable hydrogen (electrolysis powered by renewable sources), as a competitive alternative to dominant technologies to hydrogen production from natural gas (Steam Methane Reforming - SMR).

A pathway exploited refers to the electrolysers without separation of gases, of very simple construction, with significant operational benefits (no limitations regarding pressure and temperature), becoming possible to produce hydrogen with a low CAPEX.

The next step of the process would be the purification of hydrogen, using a process similar to those of SMR technologies.

So, the technical problem faced by the Applicant was to develop a new type of electrolyser without separation of gases to reduce the cost of hydrogen produced, with optimization of operating parameters, as a technological alternative path to existing commercial technologies.

To develop and test such electrolysers, the applicant considered the potential of using carbon electrodes. The idea to be tested was that the oxygen produced in the electrolysis would oxidize the carbon of the electrode with the production of CO/C02 which will be mixed with hydrogen produced in the cathode, thus obtaining in a single step a gaseous mixture in the class of Synthesis Gas.

This approach was discussed with researchers of this scientific area, which confirmed its theoretical basis. The applicant conducted tests in a laboratory electrolyser, built for this purpose, and surprisingly stated its viability. The use of graphite as electrode is justified because it is a crystalline form of carbon with high electrical conductivity, a necessary requirement for its performance as electrode. For the test, graphite plates with a thickness of 3mm and an area of 20 cm² were used; the applied voltage was 15 V, and it was observed the formation of CO/C0₂ from the reaction of oxygen with the carbon of the electrodes. The formation of CO/C0₂ also happens with other electrodes material, having carbon in its composition.

The applicant immediately stated that was a highly innovative approach with great economic potential.

The laboratory reactor used, with sodium hydroxide with low concentration (2%) as the electrolyte, validated the adequacy of graphite as bipolar electrode with a performance close to the electrodes of iron 316, with electrodes oxidation observed even at ambient temperature and pressure.

The block formed by the electrodes and separators is mounted in a suitable container format, duly sealed. The electrical energy is connected to the terminal electrodes of the stack, the positive and negative pole (anode and cathode) of the electrolyser.

The reservoir is filled with demineralized/deionized water, to which was added an electrolyte (sodium hydroxide, but may also be potassium, sodium carbide or another with equivalent performance).

The result is that in a single step, can be produced synthesis gas, key step of the production of synthetic fuels. The synthesis gas obtained is sequentially processed to obtain hydrocarbons or alcohols, depending on the intended purpose.

The process technological matrix integrates knowledge of alkaline electrolysis and oxidation of carbon to produce synthesis gas. The innovation lies in the integration of all these operations.

The use of these reactors, whose construction does not offer great complexity, allows a very significant reduction of costs compared to traditional alkaline or polymer exchange membranes electrolysers, and a much-simplified process for obtaining synthesis gas, when compared with traditional pro cesses, such as coal gasification or steam reforming of natural gas or biogas.

With the use of renewable energy in electrolysis as described, this process will allow storing this energy in the form of liquid fuels (renewable source), with a simplified logistics in particular in comparison with hydrogen (obtained by conventional electrolysis). The estimated cost is competitive with the current cost of fossil hydrocarbons.

The process may permit the development of production units from small scale to meet the family needs fuel, to large scale ones for fuel production in combination with a renewable source available, especially sun or wind.

### DESCRIPTION OF THE FIGURES

Figure 1 represents the electrolyser.
Figure 2 depicts the scheme of production of synthesis gas.

### BRIEF DESCRIPTION OF THE FIGURES

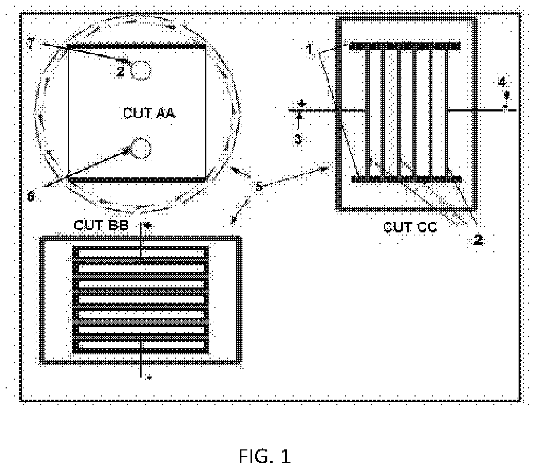

Figure 1 represents the electrolyser, where AA is a sectional front view of a cylindrical electrolyser, cutting BB represents the cylindrical electrolyser plant in section, and cutting CC represents the side view in section of the electrolyser.

The set consisting of the graphite bipolar plates (2) fitted into the splitter structure (1) or isolated by separating rings is inserted in the container. The end plates are connected to the positive (3) and negative (4) poles of a DC voltage source or rectified AC source to power the electrolyser.

Deionized water flows into the reservoir where it is diluted electrolyte (sodium hydroxide or potassium hydroxide, for example) on the appropriate percentage. The graphite plates, 3 mm thick in our test, are separated from each other by isolated rings. The applied potential may vary between 2 and 3V per cell, depending on the concentration of the electrolyte, electrode gap and temperature as main control variables.

The graphite plates have two holes each, creating an upper and a lower electrolyte circulation channel. The lower channel is connected to the inlet of the electrolyte (6), while the upper channel corresponds to the output of the electrolyte (7) dragging the gases obtained from the electrolysis and oxidation process.

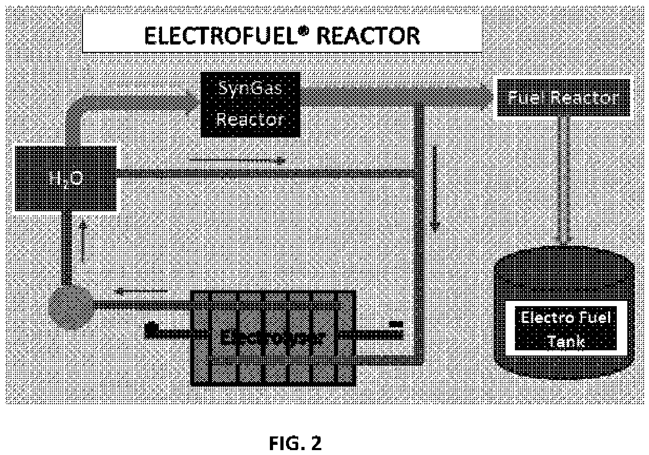

Figure 2 shows the diagram of the production of synthesis gas process.

The deionised water circulates between the water tank and electrolyser with the support of a circulation pump (2). The water tank may be provided with a heater, for a better performance of the graphite oxidation.

The electrolysis gases are recovered in the water tank and piped for a catalytic reactor, to optimize the mixing of the synthesis gas. Excess water in the process is recovered and re-circulated in the electrolyser. The synthesis gas is piped to a second reactor for producing synthetic hydrocarbon.

### OBJECT OF THE INVENTION

The first object of the present invention refers to an alkaline electrolyser, wherein the electrolysis is carried out without separation of the gases (oxygen and hydrogen) obtained from the dissociation of water. The electrodes are constituted by graphite, with orifices which are flow channels of the electrolyte. The electrodes are isolated from each other by separating rings and immersed in a properly sealed reservoir containing deionized water to which is added an electrolyte.

In the tested configuration of the invention, the graphite plates have a thickness of 3mm and a floor area of 10 to 40 cm², preferably 20 cm², and the applied voltage was 10-15 v, preferably 15 V.

In addition, the electrolyte is sodium hydroxide at low concentration and terminal electrodes are the positive and negative poles.

The second object of the present invention refers to a process of electrolysis performed in the electrolyser, powered by a source of electrical energy, where one obtains a mixture of gases containing hydrogen and oxygen, which will react with the carbonaceous material of the electrode, producing synthesis gas in one step.

The power of the electrolyser is from any source of electrical power, but if this one is from renewable sources it will lead to the production of synthetic renewable fuels that contribute to energy and environmental sustainability.

## Claims

1. Alkaline electrolyser, comprising:
- a sealed reservoir containing a mixture of deionized water and an electrolyte;
- a set consisting of:
- graphite bipolar plates (2), and
- separating rings adapted to isolate the plates (2),
the set being mounted in the reservoir so that the plates (2) are immersed in the mixture;
wherein
- the end plates (2) are connected to the positive (3) and negative (4) poles of a DC voltage source, and wherein
- each graphite plate (2) has two holes forming an upper and a lower electrolyte circulation channel; the lower channel is connected to the inlet of the electrolyte (6) and the upper channel is connected to the output of the electrolyte (7).

2. Alkaline electrolyser according to claim 1 wherein the plates (2) have a thickness of 2 mm to 4 mm and a working area of 10 to 40 cm².

3. Alkaline electrolyser according to any one of claims l to 2 **characterized in that** the electrolyte is sodium hydroxide.

4. Electrolysis process carried out in the alkaline electrolyser described in claims 1 to 3, powered by an electrical energy source, **characterized by** obtaining a gas mixture containing hydrogen and oxygen, which is piped to a reactor with the carbonaceous material to produce synthesis gas in one step.

## Patentansprüche

1. Alkalischer Elektrolyseur, bestehend aus:
- einem versiegelten Behälter, der eine Mischung aus entionisiertem Wasser und einem Elektrolyten enthält;
- ein Set, bestehend aus:
- Graphit-Bipolarplatten (2) und
- Trennringe zur Isolierung der Platten (2),
das Set wird so in den Behälter eingesetzt, dass die Platten (2) in die Mischung eintauchen;
wobei
- die Endplatten (2) mit dem positiven (3) und dem negativen (4) Pol einer Gleichspannungsquelle verbunden sind, und wobei
- jede Graphitplatte (2) zwei Löcher aufweist, die einen oberen und einen unteren Elektrolytumlaufkanal bilden; der untere Kanal ist mit dem Einlass des Elektrolyten (6) und der obere Kanal mit dem Auslass des Elektrolyten (7) verbunden.

2. Alkalischer Elektrolyseur nach Anspruch 1, wobei die Platten (2) eine Dicke von 2 mm bis 4 mm und eine Arbeitsfläche von 10 bis 40 cm² aufweisen.

3. Alkalischer Elektrolyseur nach einem der Ansprüche 1 bis 2, **dadurch gekennzeichnet, dass** der Elektrolyt Natriumhydroxid ist.

4. Elektrolyseverfahren, das in dem in den Ansprüchen 1 bis 3 beschriebenen alkalischen Elektrolyseur durchgeführt wird, der mit einer elektrischen Energiequelle betrieben wird, **dadurch gekennzeichnet, dass** ein Wasserstoff und Sauerstoff enthaltendes Gasgemisch erhalten wird, das in einen Reaktor mit dem kohlenstoffhaltigen Material geleitet wird, um in einem Schritt Synthesegas herzustellen.

## Revendications

1. Électrolyseur alcalin, comprenant :
- un réservoir étanche contenant un mélange d'eau désionisée et d'un électrolyte ;
- un ensemble constitué de :
- plaques bipolaires de graphite (2), et
- anneaux de séparation conçus pour isoler les plaques (2),
l'ensemble étant monté dans le réservoir de sorte que les plaques (2) soient immergées dans le mélange ;
dans lequel
- les plaques d'extrémité (2) sont reliées aux pôles positif (3) et négatif (4) d'une source de tension continue, et dans lequel
- chaque plaque de graphite (2) comporte deux orifices formant un canal de circulation de l'électrolyte supérieur et un canal de circulation de l'électrolyte inférieur ; le canal inférieur est relié à l'entrée de l'électrolyte (6) et le canal supérieur est relié à la sortie de l'électrolyte (7) .

2. Électrolyseur alcalin selon la revendication 1, où les plaques (2) ont une épaisseur de 2 mm à 4 mm et une zone utile de 10 à 40 cm².

3. Électrolyseur alcalin selon l'une quelconque des revendications l à 2, **caractérisé en ce que** l'électrolyte est l'hydroxyde de sodium.

4. Procédé d'électrolyse réalisé dans l'électrolyseur alcalin décrit dans les revendications 1 à 3, alimenté par une source d'énergie électrique, **caractérisé par** l'obtention d'un mélange de gaz contenant de l'hydrogène et de l'oxygène, qui est canalisé vers un réacteur avec le matériau carboné pour produire un gaz de synthèse en une étape.
